# EUROPEAN PATENT SPECIFICATION

(11) **EP 1 788 317 B1**
(45) Date of publication and mention of the grant of the patent: **05.10.2016**
(21) Application number: 06015596.7
(22) Date of filing: 26.07.2006
(51) Int. Cl.: F24F 3/16, F24F 7/08, F24F 12/00

(54) **Air conditioning system**
Klimaanlage
Conditionneur d'air

(30) Priority: 21.11.2005 KR 20050111142; 06.12.2005 KR 20050117820
(43) Date of publication of application: 23.05.2007
(73) Proprietor: LG Electronics Inc., Seoul 07336 (KR)
(72) Inventor: Song, Chang Hyun, Pusan-si Gyeongsangnam-do (KR); Lee, Ho Beom, Jangyoo-myun, Kimhae-si Gyeongsangnam-do (KR); Park, Jong Hoon, Changwon-si, Kyungsangnam-do, 641-711 (KR); Kang, Dong Hoon, Pusan-si Gyeongsangnam-do (KR); Bang, Ki Suk, Pusan-si Gyeongsangnam-do (KR)
(74) Representative: Ter Meer Steinmeister & Partner

(56) References cited:
- EP-A1- 1 559 963
- EP-A1- 1 559 964
- DE-A1- 10 109 753
- GB-A- 1 271 205
- JP-A- 5 106 883
- JP-A- 5 106 884
- JP-A- 2002 206 778
- US-A- 5 358 444
- US-A1- 2002 072 322
- US-A1- 2004 139 712
- US-A1- 2005 167 077

## Description

### BACKGROUND OF THE INVENTION

### Field of the Invention

The present invention relates to an air conditioning system, and more particularly, to an air conditioning system in which an air cleaning unit operates in association with other air conditioning devices such a heat recovery ventilator. Further, the present invention relates to an air conditioning system in which a plurality of air cleaning units is connected to a single heat recovery ventilator.

### Description of the Related Art

When a living thing breathes in a closed space, carbon dioxide increases with time, and thus it becomes more difficult for the living thing to breathe in the closed space. Therefore, closed spaces, such as an office where a lot of people works together or the interior of a car, should be periodically ventilated. A ventilation system can be generally used for this purpose.

Such a ventilation system is generally installed on a floor or a ceiling to allow inflow of outdoor air and outflow of indoor air. The ventilation system is useful, particularly for places where natural ventilation is poor or many persons stay.

However, only an air cleaning unit or ventilation device is provided in the related art ventilation system. Therefore, for example, when the ventilation device operates in winter, heating efficiency is deteriorated since cold outdoor air is directly introduced into an indoor area.

Further, to control the temperatures of indoor area compartments while the ventilation device operates, an air cooling unit or a heat pumping unit should operate additionally.

Furthermore, since the ventilation device ventilates a number of indoor area compartments, ventilation efficiency of the device is low when the total size of the indoor area is considered.

In addition, to individually control the environment of each compartment of a building, a separate device such as a ventilation device or an air cooling unit should be installed in each compartment. In other words, many devices and efforts are required to individually control the environment of each compartment of a building (e.g., one compartment should be cooled while another room is just ventilated).

EP 1 559 963 A1 shows a combination air purifier and air ventilator. The air purifier or air cleaning unit includes a grille having an inlet and an outlet or discharge grille, a fan 50 sucking indoor air, a filter for cleaning the sucked air and an installation case having a suction or a supply hole connected to a supply duct and a return or exhaust hole connected to a return duct. The supply duct and the return duct are provided with a fan. The air cleaning unit can either perform a ventilation mode or a cleaning mode. Further, the air cleaning unit is connected via the supply duct and the return duct with an electric heat exchanger that performs a roll of exchanging heat between the external air and the room air flowing respectively in the supply duct and the return duct, indirectly.

EP 1 559 963 A1 discloses the preamble of claim 1.

US 2002/0072322 A1 discloses methods and apparatuses for re-circulating air in a controlled ventilated environment. A ventilating system comprises an air handling unit that supplies air to and draws air from a room via a single duct. The single duct forms together with the room an air circuit having the air handling unit placed at a remote position to control therewith the ratio of re-circulated and newly supplied air for the whole air circuit.

### SUMMARY OF THE INVENTION

Accordingly, the present invention is directed to an air conditioning system that substantially obviates one or more problems due to limitations and disadvantages of the related art.

An object of the present invention is to provide an air conditioning system that ventilates a plurality of indoor area compartments using a single ventilation unit and thus has a high ventilation efficiency when the total volume of the indoor area is considered.

Another object of the present invention is to provide an air conditioning system that can individually control the environments of many indoor area compartments.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects in accordance with the purpose of the invention, there is provided an air conditioning system as stated in claim 1.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
Fig. 1 is a perspective view of an air cleaning unit with ventilation and air-cleaning functions according to the present invention;
Fig. 2 is an exploded perspective view of the air cleaning unit depicted in Fig. 1;
Fig. 3 is a vertical sectional view of the air cleaning unit depicted in Fig. 1;
Fig. 4 is a perspective view showing a first embodiment of an installation case according to the present invention;
Fig. 5 is a perspective view showing a second embodiment of the installation case according to the present invention;
Fig. 6 shows a first embodiment of installing the air cleaning unit in a building according to the present invention;
Fig. 7 is an exploded perspective view showing an air flow of the air cleaning unit in ventilation mode;
Fig. 8 is a bottom perspective view showing an air flow of the air cleaning unit in cleaning mode;
Fig. 9 shows a second embodiment of installing the air cleaning unit in a building according to the present invention;
Fig. 10 is a system diagram showing the air cleaning unit connected to a ventilation unit according to the present invention;
Fig. 11 is a sectional view showing a schematic air flow of the system shown in Fig. 10;
Fig. 12 is an exploded perspective view of a duct member according to the present invention;
Figs. 13 to 15 show air conditioning systems according to embodiments of the present invention;
Fig. 16 shows a block diagram of an air conditioning system according to another embodiment of the present invention;
Fig. 17 shows a block diagram of an air conditioning system according to another embodiment of the present invention;
Figs. 18 and 19 are system diagrams of air conditioning systems according to another embodiments of the present invention;
Figs. 20 and 21 are system diagrams of air conditioning systems according to another embodiments of the present invention;
Fig. 22 is a block diagram of an air conditioning system according to another embodiment of the present invention;
Fig. 23 is a block diagram of an air conditioning system according to another embodiment of the present invention; and
Fig. 24 is a block diagram of an air conditioning system according to another embodiment of the present invention.

### DETAILLED DESCRIPTION OF THE INVENTION

Reference will now be made in detail to the preferred embodiments of the present invention, examples of which are illustrated in the accompanying drawings.

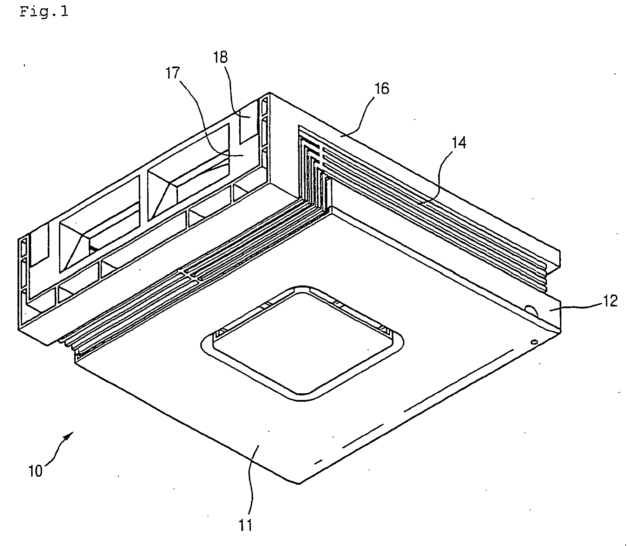

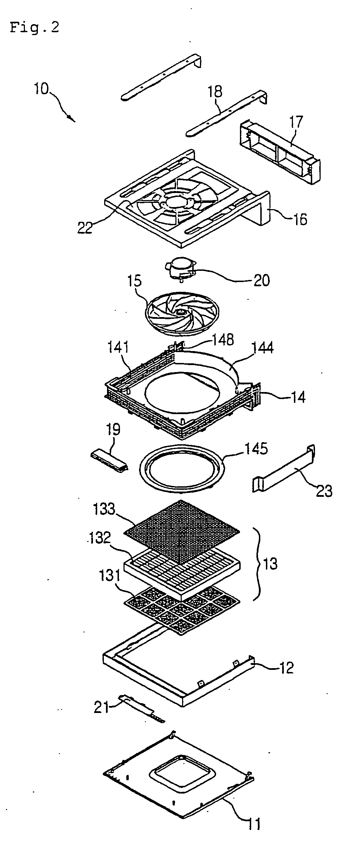

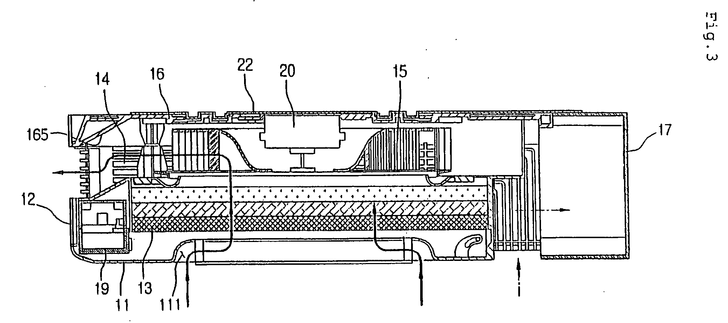

Fig. 1 is a perspective view of an air cleaning unit 10 with ventilation and air-cleaning functions according to the present invention, Fig. 2 is an exploded perspective view of the air cleaning unit 10, and Fig. 3 is a vertical sectional view of the air cleaning unit 10.

Referring to Figs. 1 to 3, the air cleaning unit 10 is designed to provide both ventilation and air cleaning. The air cleaning unit 10 includes: a front cover 11 having an air suction hole in a center portion; a cover guide 12 on which the front cover 11 is mounted; a grill 14 having cleaned air discharge holes on lateral sides and on which the cover guide 12 is slidably mounted; a filter 13 disposed in a lower portion of the grill 14 to remove impurities and odors from air; a control box 19 coupled to a lower edge of the grill 14; a control panel 21 detachably coupled to a lower portion of the cover guide 12; and a shield member 23 selectively shields screening the cleaned air discharge holes formed on the lateral sides of the grill 14. In detail, a main printed circuit board (PCB) substrate is disposed in the control box 19 for controlling the operation of the air cleaning unit 10, and a display PCB substrate is mounted on one side of a rear surface of the control panel 21 for display the operational state of the air cleaning unit 10. When the air cleaning unit 10 is installed between a wall and a ceiling, the cleaned air discharge holes of the grill 14 facing the wall is screened by the shield member 23. In this case, air is discharged through the discharge holes located on a front and an opposite side of the grill 14. The filter 13 includes a pre filter 131 for removing floating duct particles having a relatively large size, a high efficiency particulate air (HEPA) filter 132 for removing tiny dust particles passing through the pre filter 131, and a deodorization filter 133 for removing odors from air passing through the HEPA filter 132.

The air cleaning unit 10 further includes a fan 15 disposed above the filter 13 for drawing indoor or outdoor air into the air cleaning unit 10, a shroud 145 detachably coupled to a lower portion of the grill 14 for guiding the air drawn by the fan 15, a fan motor 20 driving the fan 15, and a rear panel 16 having one side connected to an exhaust duct and a supply duct. The fan motor 20 is mounted on the rear panel 16.

The air cleaning unit 10 further includes a base panel 22 mounted on a top surface of the rear panel 16 for strengthen the rear panel 16, an installation case 17 coupled to one side of the rear panel 16 for allowing the rear panel 16 to be easily connected to the exhaust duct and the supply duct, and installation bars 18 detachably coupled to a top portion of the rear panel 16 for allowing the rear panel 16 to be easily mounted on a wall or a ceiling.

Hereinafter, an operation of the air cleaning unit 10 will be described when the air cleaning unit 10 is installed on a ceiling according to an embodiment of the present invention.

When the air cleaning unit 10 is installed on a ceiling, the front cover 11 faces a floor. In this state, the fan 15 is driven by the fan motor 20 when a cleaning mode is selected. Then, indoor air is sucked by the operation of the fan 15 into the air cleaning unit 10 through an indoor air suction hole 111 (refer to Fig. 3) formed in the front cover 11. Preferably, the fan 15 may be a centrifugal fan that sucks air in its axial direction and discharges the air in its radial direction. The sucked air passes through the filter 13 such that impurities can be removed from the air. After the filter 13, the air is guided to a top portion of the grill 14 by the shroud 145 where the air is further guided by an air guide 144 to a discharge grill 141 formed on a side of the grill 14. Through the discharge grill 141, the air is discharged back to an indoor area.

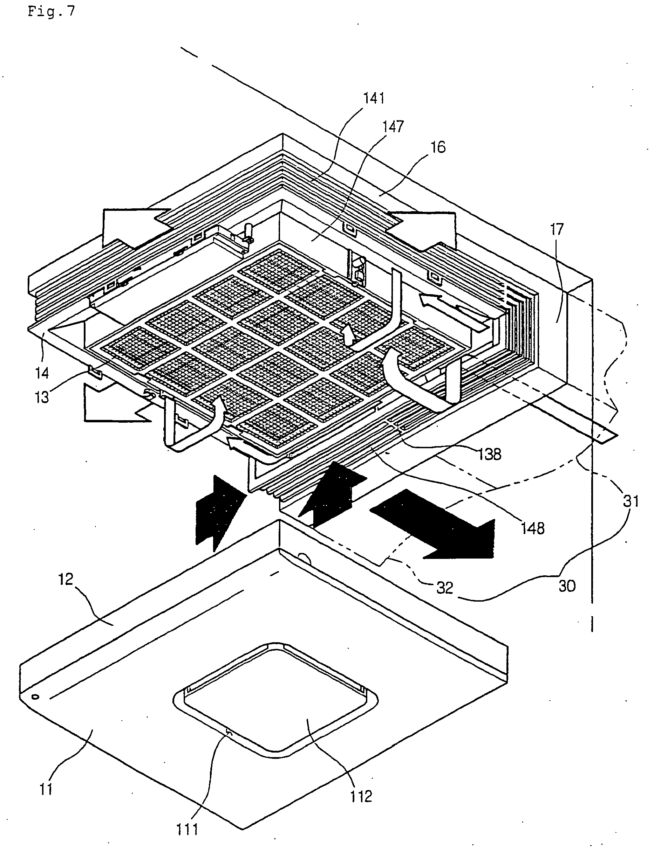

When a ventilation mode is selected, indoor air is sucked into the air cleaning unit 10 through an exhaust grill 148 formed on a side of the grill 14, and then is directed toward an exhaust duct 32 (refer to Fig. 7) connected with the air cleaning unit 10. Meanwhile, outdoor air is sucked into the air cleaning unit 10 through a supply duct 31 (refer to Fig. 7) connected with the air cleaning unit 10. The sucked outdoor air passes through the filter 13 and is discharged from the air cleaning unit 10 to the indoor area through the discharge grill 141 of the grill 14.

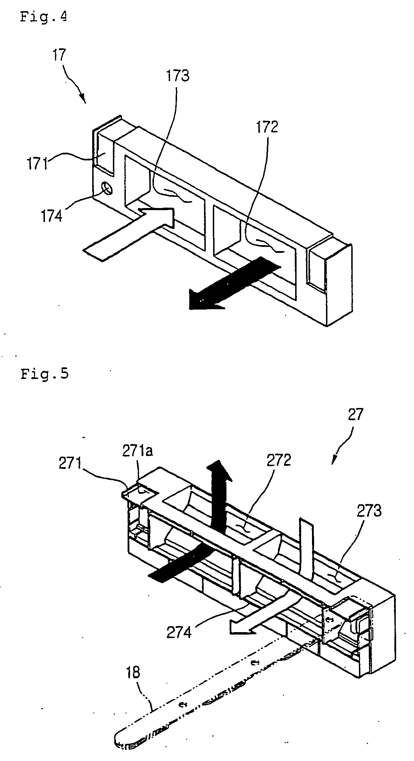

Fig. 4 is a perspective view showing a first embodiment of an installation case according to the present invention.

Referring to Fig. 4, an installation case 17 of the current embodiment is characterized in that the installation case 17 is coupled to the air cleaning unit 10 when the air cleaning unit 10 is connected to a supply duct and an exhaust duct that are formed through a wall. When assemble, the installation case 17 is coupled to one side of the rear panel 16. In detail, one end of the rear panel 16 is bent downwardly (refer to Fig. 2). The bent end of the rear panel 16 is inwardly recessed in correspondence with the installation case 17 for receiving the installation case 17.

In detail, the installation case 17 includes bar receiving surfaces 171 on both top sides for receiving one ends of the installation bars 18, a wiring penetration hole 174 formed in an edge portion, and a suction hole 173 and an exhaust hole 172 formed through a front portion. The rear panel 16 includes a suction hole and an exhaust hole in the bent end for communicating with the suction hole 173 and the exhaust hole 172 of the installation case 17.

Fig. 5 is a perspective view showing a second embodiment of the installation case of the air cleaning unit 10 according to the present invention.

Referring to Fig. 5, an installation case 27 of the current embodiment is characterized in that the installation case 27 is coupled to the air cleaning unit 10 when the air cleaning unit 10 is connected to a supply duct and an exhaust duct that are formed through a ceiling.

In detail, the installation case 27 includes a suction hole 273 and an exhaust hole 272 that are formed from a front surface to a top surface, bar receiving surfaces 271 formed in both top sides for receiving the installation bars 18, and bar inserting holes 271a formed in rear ends of the bar receiving surfaces 271 and having a predetermined width.

In more detail, the bent end of the installation bar 18 is inserted into the bar inserting hole 271a. The suction hole 273 and the exhaust hole 272 of the installation case 27 are connected to the suction hole and the exhaust hole of the rear panel 16, respectively.

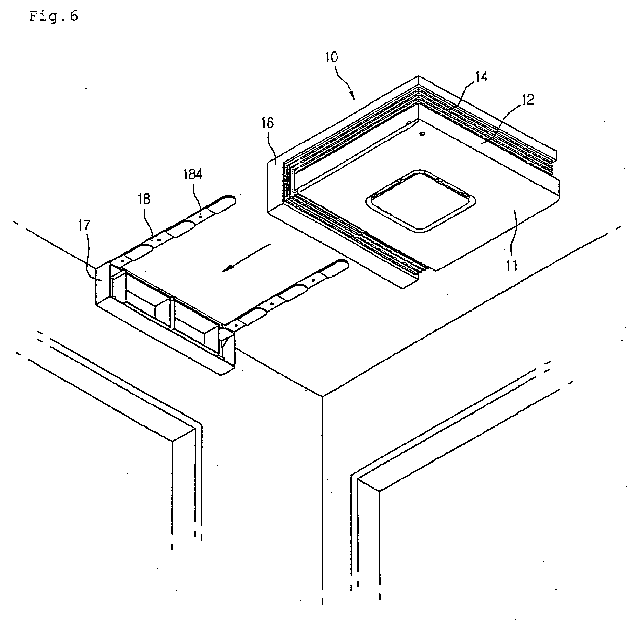

Fig. 6 shows a first embodiment of installing the air cleaning unit 10 in a building according to the present invention.

Referring to Fig. 33, in this embodiment, a supply duct and an exhaust duct are formed in a wall of the building for connection with the air cleaning unit 10.

In detail, a duct member 30 includes a supply duct 31 (refer to Fig. 7) and an exhaust duct 32 (refer to Fig. 7). The duct member 30 is formed in the wall of the building. In this case, the installation bar 17 of Fig 31 having the suction hole 173 and the exhaust hole 172 in a front-to-back direction is used for installing the air cleaning unit 10 in the building. In detail, the installation case 17 and the installation bars 18 are coupled to each other and then attached to a ceiling while aligning the suction hole 173 and the exhaust hole 172 with the supply duct 31 and the exhaust duct 32. Next, fasteners are inserted into the ceiling through the coupling holes 184 of the installation bars 18 for securely fix the installation bars 18 and the installation case 17 to the ceiling. Then, the air cleaning unit 10 is pushed in the direction of arrow to coupling the installation bars 18 to the installation bar mounting structure of the rear panel. In this way, the air cleaning unit 10 can be mounted on the ceiling.

Fig. 7 is an exploded perspective view showing an air flow throughout the air cleaning unit 10 in ventilation mode.

Referring to Fig. 7, the suction hole 173 of the installation case 17 is connected to the supply duct 31, and the exhaust hole 172 of the installation case 17 is connected to the exhaust duct 32.

In detail, outdoor air is introduced into the air cleaning unit 10 from the supply duct 31 through the suction hole 163 of the rear panel 16. Here, the indoor air suction hole 111 of the front cover 11 can be opened to perform both the ventilation mode and cleaning mode, or closed to perform only the ventilation mode. For this, the suction panel 112 may be openably mounted on the front cover 11 as described above.

In more detail, outdoor air introduced through the supply duct 31 flows along the filter housing 147 of the grill 14 down to a lower end of the filter housing 147 and reaches the bottom of the filter 13. Then, the outdoor air passes through the filter 13 upwardly toward the fan 15. Here, since the pressure around the bottom of the filter 13 is lower than the atmospheric pressure due to the operation of the fan 15, the outdoor air introduced through the suction duct 31 flows down to the bottom of the filter 13. That is, since air flows from a high pressure area to a low pressure area, the outdoor air flows along the filter housing 147 down to the bottom of the filter 13.

Further, while passing through the filter 13 in an upward direction, the outdoor air are sequentially cleaned by the pre filter 131, the HEPA filter 132, and the deodorization filter 133. After passing through the deodorization filter 133, the outdoor air reaches fan 15 through the orifice 143. Since the fan 15 is a centrifugal fan that sucks air in an axial direction and blows the air in a radial direction, the outdoor air is horizontally blown by the fan 15. Then, the outdoor air is guided by a discharge guide 165 (refer to Fig. 3) of the rear panel 16 and the air guide 144 of the grill toward the discharge grill 141. Finally, the outdoor air is discharged to an indoor area through the discharge grill 141.

While the outdoor air is introduced from the supply duct 31, polluted indoor air is expelled through the exhaust door 32.

In detail, a discharge fan can be installed in the exhaust duct 32 or on an end of the exhaust duct 32 to indoor air through the exhaust duct 32. Further, a heat recovery ventilator can be installed between the exhaust duct 32 and the supply duct 31 for heat exchange.

In more detail, when the pressure inside the exhaust duct 32 decreases by the operation of the discharge fan connected to the exhaust duct 32, indoor air is introduced into the exhaust duct 32 through the exhaust grill 148. As explained above, the exhaust grill 148 is formed on a side portion and a bottom portion of the air cleaning unit 10 for rapidly discharge polluted indoor air to an outdoor area. The indoor air sucked through the exhaust grill 148 does not flow to the supply duct 31 owing to the compartment wall 138 and the air guide 144 (refer to Fig. 2) of the grill 14.

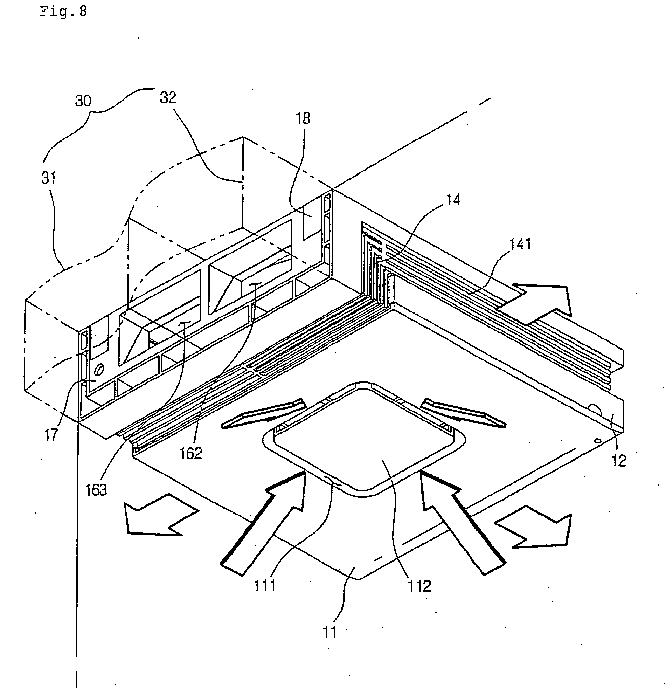

Fig. 8 is a bottom perspective view showing an air flow throughout the air cleaning unit 10 in cleaning mode.

Referring to Fig. 8, in cleaning mode, indoor air is sucked through the indoor air suction hole 111 and passes through the filter 13. While passing through the filter 13, the indoor air is cleaned. Then, the indoor air is discharged back to an indoor area through the discharge grill 141 of the grill 14.

Meanwhile, when the cleaning mode is selected, the suction hole 163 connected to the supply duct 31 can be closed.

In detail, although the fan 15 rotates in the cleaning mode, the indoor air is not sucked through the exhaust grill 148. Therefore, it is not required to screen the exhaust hole 162 using an additional part. However, since the suction hole 163 communicates with the filter 13, outdoor air can be introduced into the air cleaning unit 10 through the suction hole 163 when the indoor air is sucked through the indoor air suction hole 111.

Therefore, to perform only the cleaning mode by preventing outdoor air from flowing into the air cleaning unit 10 through the suction hole 163 connected to the supply duct 31 in the cleaning mode, an additional mechanism can be employed for selectively close the suction holes 163 and 173. In one embodiment, an opening/closing unit can be installed on a front side or a back side of the suction hole 173 of the installation case 17. A micro computer can be used to automatically operate the opening/closing unit according to a selected mode.

Alternatively, the opening/closing unit can be installed on a front side of a back side of the suction hole 163 of the rear panel 16. For example, a plate having a size larger than or equal to that of the suction hole 163 or 173 can be rotatably or slidable installed to selectively open and close the suction hole 163 or 173. Here, the opening/closing mechanism is not limited. Various opening/closing mechanisms can be used.

The air flow in the cleaning mode will now be more fully described. In cleaning mode, the fan 15 is operated to suck air from an indoor area through the indoor air suction hole 111. The sucked indoor air is cleaned while passing through the filter 13, and then reaches the fan 15. The indoor air is blown by the fan 15 in a radial direction and guided by the air guide 144 and the discharge guide 165 to the discharge grill 141 where the indoor air is discharged back to the indoor area.

As described above, both in the cleaning mode and the ventilation mode, air introduced into the air cleaning unit 10 passes through the filter 13. Therefore, clean air can be supplied to the indoor area. Further, the discharge grill 141 is formed in three directions of the air cleaning unit 10, so that air discharged from the air cleaning unit 10 into the indoor area can be circulated throughout the indoor area. In other words, if the discharge grill 141 is formed in a downward direction of the air cleaning unit 10, air discharged from the air cleaning unit 10 cannot be circulated throughout the indoor area. Furthermore, the exhaust grill 148 is formed on a side portion and a bottom portion of the air cleaning unit 10, so that polluted indoor air can be rapidly expelled to the outdoor area. In addition, the indoor air suction hole 111 is formed in the bottom of the air cleaning unit 10, and the discharge grill 141 is formed on the side portions of the air cleaning unit 10, so that air discharged from the discharge grill 141 is not directly sucked through the indoor air suction hole 111. Further, in cleaning mode, indoor air is sucked and discharged in multiple directions, so that the indoor air can be quickly cleaned. Furthermore, the air cleaning unit 10 can be operated in both ventilation and cleaning modes at the same time. On the contrarily, the air cleaning unit 10 can be operated either in ventilation mode or in cleaning mode by movably installing the suction panel 112.

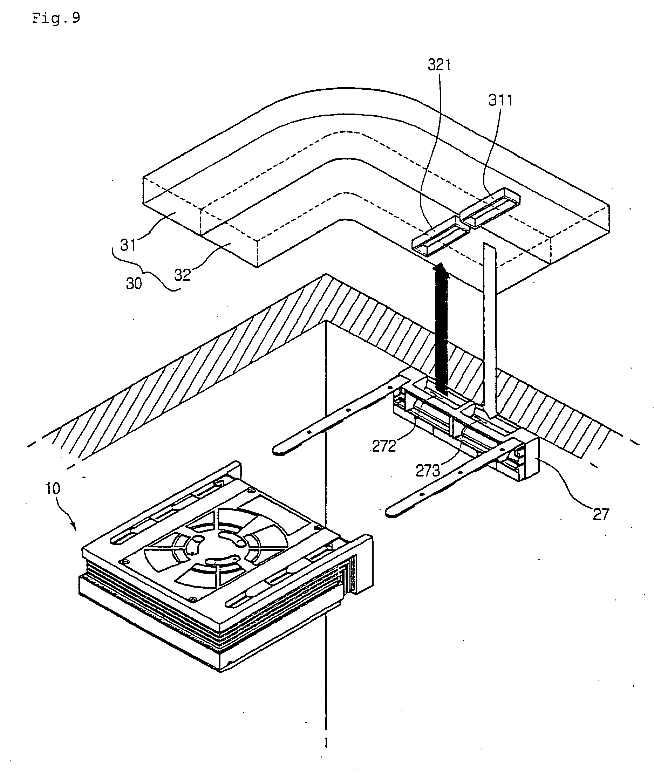

Fig. 9 shows a second embodiment of installing the air cleaning unit 10 in a building according to the present invention.

Referring to Fig. 9, the air cleaning unit 10 is connected to a duct member 30 formed in a ceiling.

In detail, the air cleaning unit 10 can be connected to the duct member 30 formed in the ceiling by using the installation case 27 of Fig. 32. The suction hole 273 of the installation case 27 is connected to a branch supply duct 311 formed on a bottom surface of a supply duct 31 of the duct member 30. The exhaust hole 272 of the installation case 17 is connected to a branch exhaust duct 321 formed on a bottom surface of an exhaust duct 32 of the duct member 30. Alternatively, the suction hole 273 and the exhaust hole 272 of the installation case 17 can be directly connected to one ends of the supply duct 31 and the exhaust duct 32, respectively. In detail, when a plurality of air cleaning unites is connected to the duct member 30, the air cleaning unites may be connected to the duct member 30 through branch ducts. On the contrary, when a single air cleaning unit is connected to the duct member 30, the air cleaning unit may be directly connected to an end of the duct member 30.

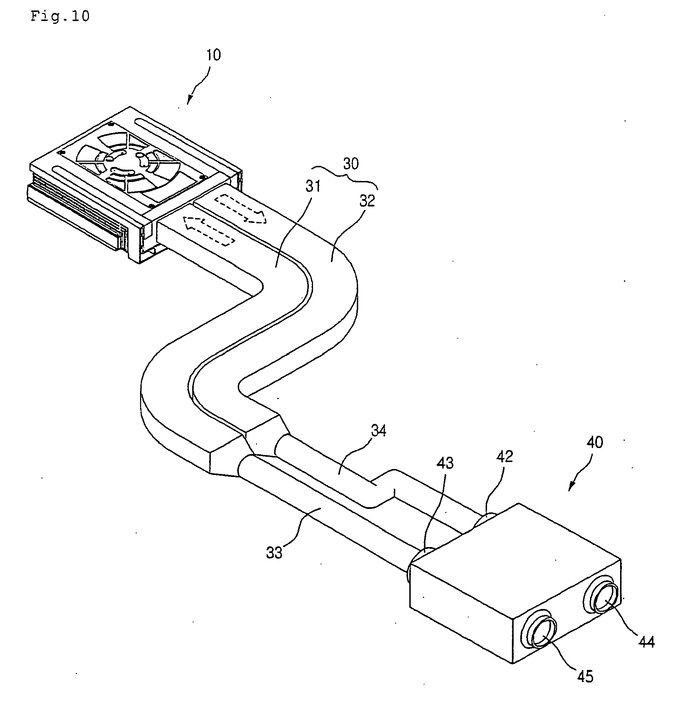

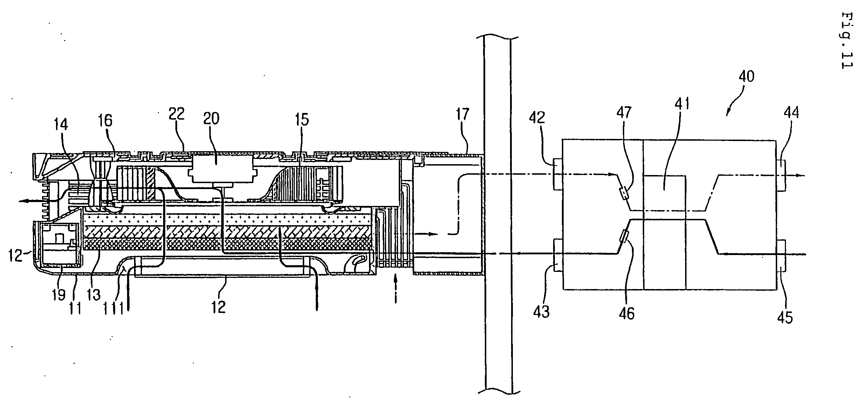

Fig. 10 is a system diagram showing the air cleaning unit 10 connected to a ventilation unit according to the present invention, and Fig. 11 is a sectional view showing a schematic air flow of the system shown in Fig. 10.

Referring to Figs. 10 and 11, the air cleaning unit 10 is connected to the heat recovery system 35 such as a ventilation unit through a duct member 30 such that the air cleaning unit 10 can provide both ventilation and air-cleaning.

In detail, one ends of a supply duct 31 and an exhaust duct 32 of the duct member 30 are connected to the air cleaning unit 10, and the other ends are connected to the heat recovery ventilator 35. In the heat recovery ventilator 35, outdoor air to the air cleaning unit 10 exchanges heat with indoor air from the air cleaning unit 10. Therefore, the temperature of an indoor area is not rapidly fluctuated by the outdoor air supplied to the indoor area. For example, when the indoor temperature is higher than the outdoor temperature, heat is transferred from the indoor air discharged from the air cleaning unit 10 to the outdoor air to decrease temperature difference between the indoor area and the outdoor air supplied to the indoor area, thereby preventing temperature fluctuation in the indoor area.

The other ends of the supply duct 31 and the exhaust duct 32 can be connected to a supply duct connecting tube 33 and an exhaust duct connecting tube 34. The supply duct connecting tube 33 and the exhaust duct connecting tube 34 are connected to a heat recovery ventilator 40.

The heat recovery ventilator 40 includes an exhaust inlet 42 formed on one side, a supply outlet 43 formed at a predetermined distance from the exhaust inlet 42, an exhaust outlet 44 formed on the opposite side to the exhaust inlet 42, a supply inlet 45 formed on the opposite side to the supply outlet 43, and an heat exchanger 41.

The heat recovery ventilator 40 further includes an exhaust fan 47 installed in a tube between the exhaust inlet 42 and the exhaust outlet 44, and a supply fan 46 installed between a tube between the supply inlet 45 and the supply outlet 43.

In detail, the exhaust inlet 42 and the supply outlet 43 are formed on the same side of the heat recovery ventilator 40, and the exhaust outlet 44 and the supply inlet 45 are formed on the same side of the ventilator 40. However, the positions of the exhaust inlet 42 and the supply outlet 43 or the exhaust outlet 44 and the supply inlet 45 can be changed according to the type of the heat recovery ventilator 40.

In more detail, the exhaust inlet 42 is connected to the exhaust duct connecting tube 34 to allow inflow of indoor air from the air cleaning unit 10, and the supply outlet 43 is connected to the supply duct connecting tube 33 to supply outdoor air to the air cleaning unit 10.

When the exhaust fan 47 operates, indoor air is sucked into the heat recovery ventilator 40 through the exhaust inlet 42 and discharged from the heat recovery ventilator 40 to an outdoor area through the exhaust outlet 44. Further, when the supply fan 46 operates, outdoor air is sucked into the heat recovery ventilator 40 through the supply inlet 45 and discharged through the supply outlet 43 to the air cleaning unit 10 where the outdoor air is supplied to an indoor area. Here, the indoor air sucked through the exhaust inlet 42 and the outdoor air sucked through the supply inlet 45 exchange heat with each other while passing through the heat exchanger 41.

The outdoor air introduced into the air cleaning unit 10 through the supply outlet 43 is cleaned while passing through the filter 13 and then supplied to the indoor area through the discharge grill 141 of the grill 14. The indoor air is introduced into the heat recovery ventilator 40 from the indoor area through the exhaust grill 148 of the air cleaning unit 10, the exhaust duct 32, and the exhaust inlet 42, and then discharged to the outside area through the exhaust outlet 44.

In this configuration of the air conditioning system, the heat recovery ventilator 40 and the air cleaning unit 10 operate together when a ventilation mode is selected.

In detail, when the ventilation mode is selected, the fan 15 of the air cleaning unit 10, the supply and exhaust fans 46 and 47 of the heat recovery ventilator 40 are operated. The supply fan 46 draws outdoor air into the hear recovery ventilator 40 and blows the outdoor air to the air cleaning unit 10 through the supply duct 31. The fan 15 of the air cleaning unit 10 forces the introduced outdoor air through the filter 13. The outdoor air cleaned by the filter 13 is discharged to the indoor area through the discharge grill 141. The exhaust fan 47 sucks air from the indoor air through the exhaust grill 148 formed on one side of the air cleaning unit 10. Then, the indoor air is introduced into the heat recovery ventilator 40 through the exhaust duct 32. In the heat recovery ventilator 40, the outdoor air and the indoor air change heat with each other while passing through the heat exchanger 41.

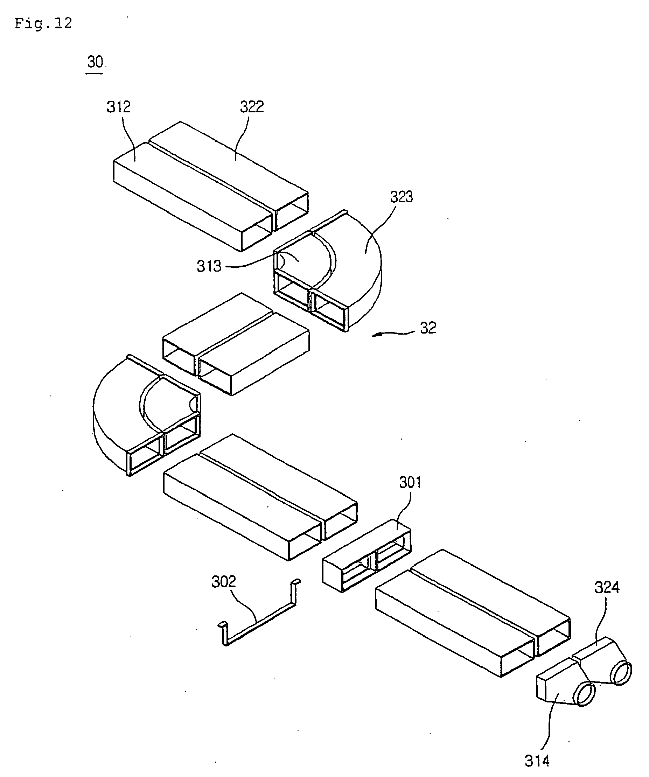

Fig. 12 is an exploded perspective view of the duct member 30 according to the present invention.

Referring to Fig. 30, the duct member 30 of the present invention includes the supply duct 31 for allowing inflow of outdoor and the exhaust duct 32 for outflow of indoor air.

In detail, the duct member 30 includes straight tubes 312 and 322 having a predetermined length, elbows 313 and 323 having a predetermined curvature, an equally-shaped connector 301 connecting one straight tubes 312 and 322 to another straight tubes 312 and 322 or to the elbows 313 and 323, and differently-shaped connectors 314 and 324 connecting the straight tubes 312 and 322 or the elbows 313 and 323 to the heat recovery ventilator 40. The duct member 30 is fixed to a ceiling using a hanger 302.

When the air cleaning unit 10 is not located in line with the heat recovery ventilator 40, the elbows 313 and 323 are used to change the direction of the duct member 30. The differently-shaped connectors 314 and 324 has one ends corresponding to the straight tubes 312 and 322 or the elbows 13 and 323, and the other ends corresponding to the supply outlet 34 and the exhaust inlet 42.

The elbows 313 and 323 and the connector 301 are sized such that the straight tubes 312 and 322 can be inserted into the elbows 313 and 323 or the connector 301 by a predetermined length. Therefore, leakage of air at joints of the duct member 30 can be prevented.

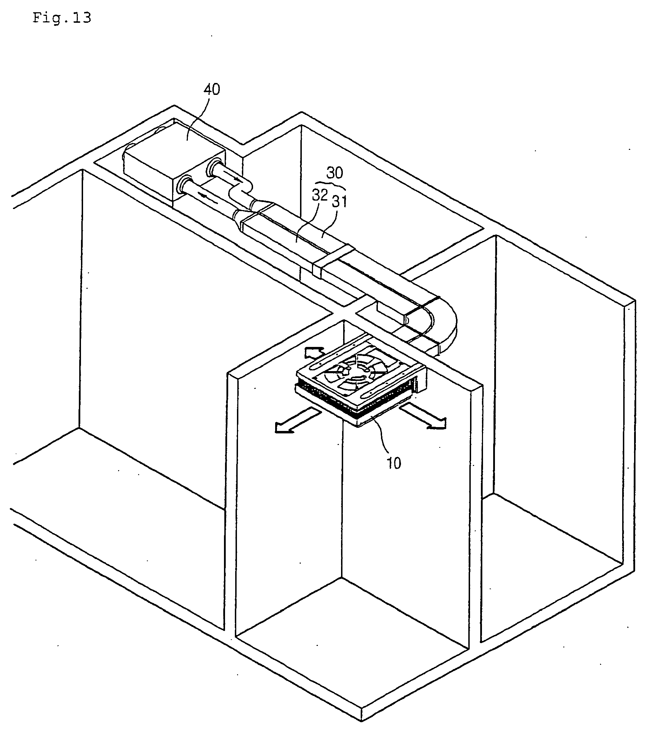

Figs. 13 to 15 show air conditioning systems according to embodiments of the present invention.

Referring to Fig. 13, an air cleaning unit 10 is connected to a heat recovery ventilator 40 through a duct member 30. The air cleaning unit 10 and the heat recovery ventilator 40 can be installed in the same indoor compartment or different indoor compartments. For example, the heat recovery ventilator 40 can be mounted on an outermost wall of a building for directly sucking outdoor air into the heat recovery ventilator 40, and the air cleaning unit 10 can be mounted on an inner wall of the building in connection with the heat recovery ventilator 40 via the duct member 30. The duct member 30 is disposed using proper numbers of straight tubes and elbows according to the location of the air cleaning unit 10 and heat recovery ventilator 40.

In case where the duct member 30 is connected between the heat recovery ventilator 40 and the air cleaning unit 10 through an inner wall of the building, the installation case 17 showing in Fig. 4 can be installed on one side of the air cleaning unit 10 for facilitating the connection between the air cleaning unit 10 and the duct member 30.

The distance between a wall and one side of the air cleaning unit 10 where a discharge grill 141 is formed can be changed according to the position of one end of the duct member 30 connected to the air cleaning unit 10.

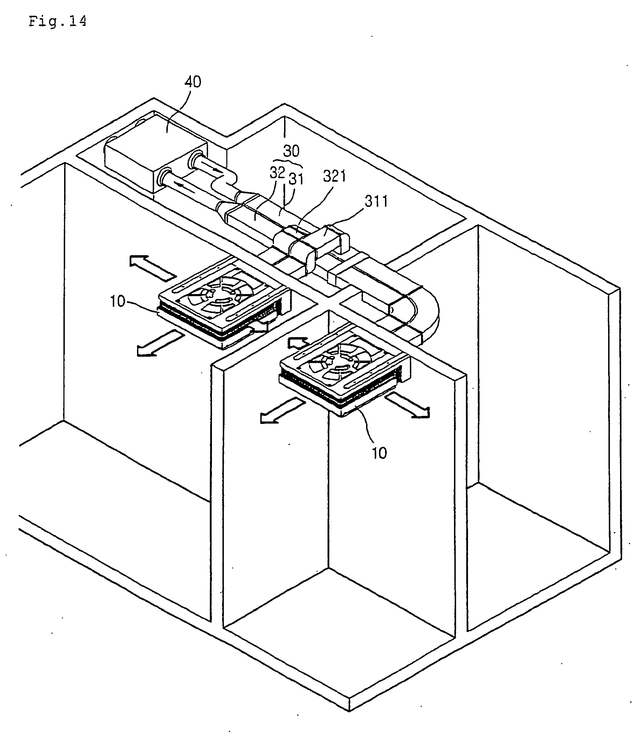

Referring to Fig. 14, at least two air cleaning units 10 can be connected to a single heat recovery ventilator 40 depending on the configuration of a duct member 30.

In detail, the duct member 30 includes a supply duct 31 and an exhaust duct 32. The supply duct 31 and the exhaust duct 32 include straight tubes and elbows. One air cleaning unit 10 is connected to one ends of the supply duct 31 and the exhaust duct 32. A branch supply duct 311 branches off from the supply duct 31 in an upward or downward direction, and a branch exhaust duct 321 branches off from the exhaust duct 32 in an upward or downward direction. Another air cleaning unit 10 is connected to one ends of the branch supply duct 311 and the branch exhaust duct 321. The air cleaning units 10 may be installed in different indoor area compartments.

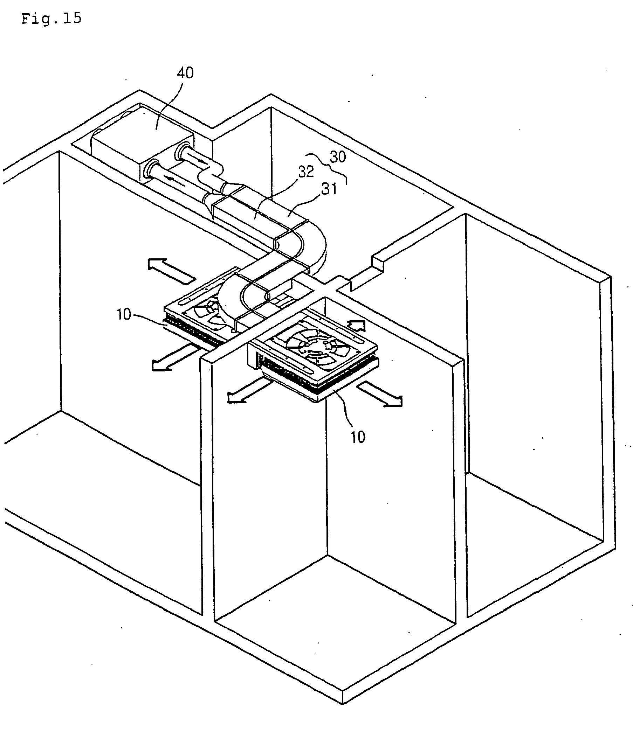

Referring to Fig. 15, air cleaning units 10 are connected to a duct member 30 in different methods depending on the structure of the duct member 30 formed in an indoor area.

In detail, when the duct member 30 passes through a ceiling of one indoor area compartment and a wall of another indoor area compartment, the air cleaning units 10 can be connected to the duct member 30 using different installation cases.

In more detail, when the duct member 30 passes through a ceiling, and a branch supply duct and an branch exhaust duct extend downward from the duct member 30, an air cleaning unit 10 provided with an installation case 27 as shown in Fig. 5 can be installed in an indoor area compartment in connection with the branch supply duct and the branch exhaust duct. Further, when the duct member 30 further extends to another indoor area compartment through a wall, another air cleaning unit 10 provided with an installation case 17 as shown in Fig. 4 can be installed on the wall of the another indoor area compartment in connection with leading ends of a supply duct 31 and an exhaust duct 32 of the duct member 30.

As shown in Fig. 15, one air cleaning unit 10 is connected to one duct member 30 using the ceiling installation method, and another air cleaning unit 10 is connected to the same duct member 30 using the wall installation method. Further, as shown in Fig. 14, air cleaning units 10 can be installed in the respective indoor area compartments by connecting additional branch duct members between the duct member 30 and the air cleaning units 10.

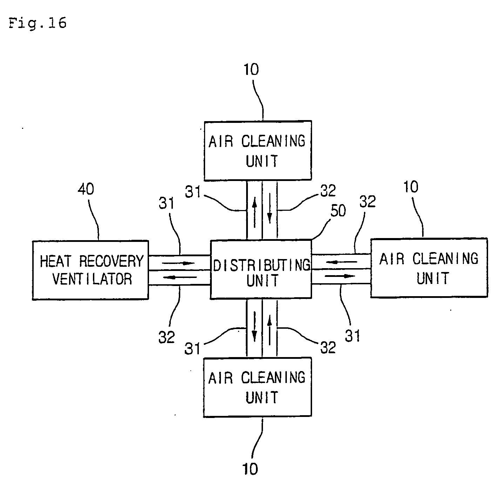

Fig. 16 shows a block diagram of an air conditioning system according to another embodiment of the present invention.

Referring to Fig. 16, a plurality of air cleaning units 10 is connected to one heat recovery ventilator 40. For this, a distributing unit 50 can be installed on one ends of a supply duct 31 and an exhaust duct 32 that extend from the heat recovery ventilator 40.

In detail, a plurality of duct members branch off from the distributing unit 50, and the air cleaning units 10 are connected to ends of the duct members. Therefore, since a plurality of air cleaning units 10 can be connected to the heat recovery ventilator 40 using the distributing unit 50 and duct members disposed between the distributing unit 50 and the respective air cleaning units 10, branch ducts extending from a duct member are not required.

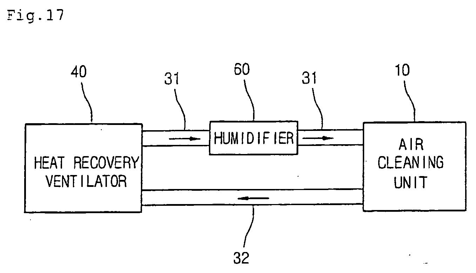

Fig. 17 shows a block diagram of an air conditioning system according to another embodiment of the present invention;

Referring to Fig. 17, the air conditioning system of the current embodiment includes a heat recovery ventilator 40, an air cleaning unit 10, and an additional device such as a humidifier 60 between the heat recovery ventilator 40 and the air cleaning unit 10.

In detail, the humidifier 60 is installed in a duct member connected between the heat recovery ventilator 40 and the air cleaning unit 10 in order to supply air having a proper humidity to an indoor area.

In more detail, the humidifier 60 is installed in a supply duct 31 of the duct member connected between the heat recovery ventilator 40 and the air cleaning unit 10, such that outdoor air can be introduced into the air cleaning unit 10 at a desired humidity. Particularly, the humidifier 60 may be installed in the middle of the supply duct 31 to increase air humidity passing through the supply duct in dry spring. Therefore, outdoor air can be supplied at a predetermined humidity and thus an additional humidifier is not required for each indoor area compartment.

Further, a heater or an air cooling unit can be installed in place of or in conjunction with the humidifier 60 for heating outdoor air to the indoor area in winter or cooling outdoor air to the indoor area in summer. Therefore, energy loss can be reduced during circulation of indoor air and outdoor air.

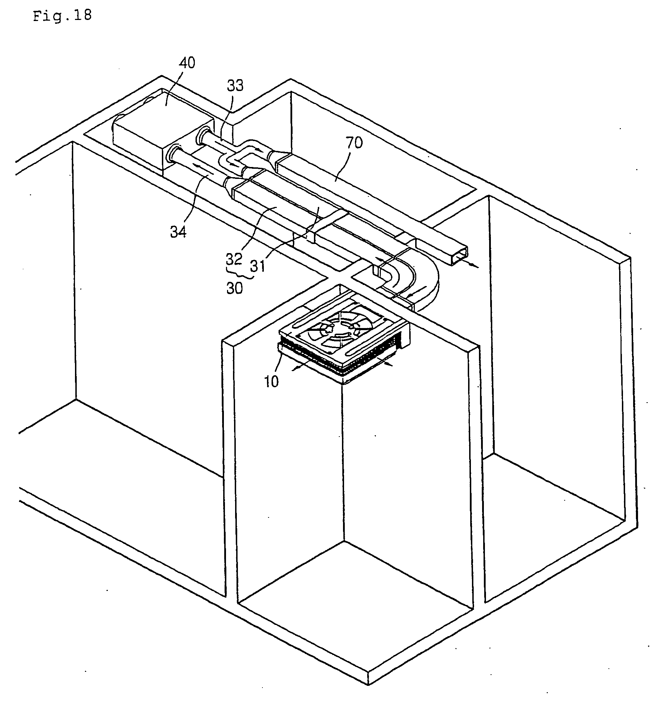

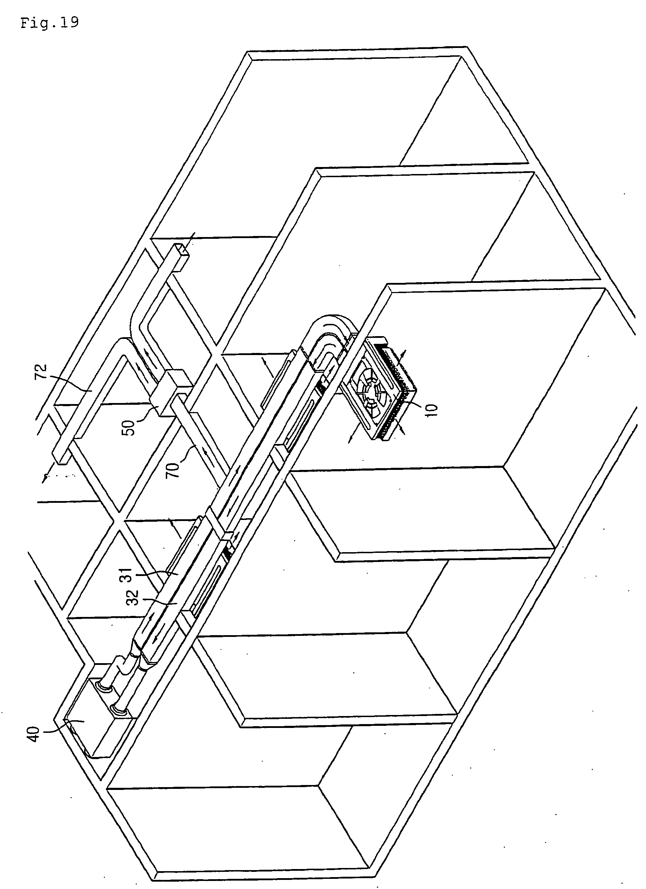

Figs. 18 and 19 are system diagrams of air conditioning systems according to another embodiments of the present invention.

Referring to Fig. 18, an air cleaning unit 10 is connected to a heat recovery ventilator 40 through a duct member 30. The air cleaning unit 10 and the heat recovery ventilator 40 can be installed in the same indoor are compartment or different indoor area compartments.

A supply duct connecting tube 33 connected to a supply outlet of the heat recovery ventilator 40 branches into two, and one of the branches is connected to a supply duct 31 and the other is connected to a diffuser 70. Therefore, outdoor air supplied through the supply outlet of the heat recovery ventilator 40 can be discharged to one indoor area compartment through the supply duct 31 and the air cleaning unit 10 and to another indoor area compartment through the diffuser 70. Since an end of the diffuser 70 and the air cleaning unit 10 are disposed in different indoor area compartments, the environments of the indoor are compartments can be differently controlled.

When the duct member 30 is connected between the heat recovery ventilator 40 and the air cleaning unit 10 through wall, an installation case having suction and exhaust holes in a front-to-back direction can be installed on one side of the air cleaning unit 10 for connection between the duct member 30 and the air cleaning unit 10.

The distance between a wall and a discharge grill formed on one side of the air cleaning unit 10 may be varied according to the location of one end of the duct member 30 passing through a wall.

Referring to Fig. 19, an air conditioning system of the current embodiment is characterized in that a distributing unit 50 is installed on an end of a diffuser 70 and a plurality of discharge tubes 72 branches off from the distributing unit 50.

In detail, when a duct member 30 connected to a heat recovery ventilator 40 passes through a ceiling of one indoor area compartment and a wall of another indoor area compartment, air cleaning units 10 can be connected to the duct member 30 using different installation cases as described above. The diffuser 70 can be directly connected to a supply duct connecting tube as shown in Fig. 18 or branch off from a supply duct 31 as shown in Fig. 19. The distributing unit 50 is installed on an end of the diffuser 70, and a plurality of discharge tubes 72 branches off from the distributing unit 50 toward a plurality of indoor area compartments.

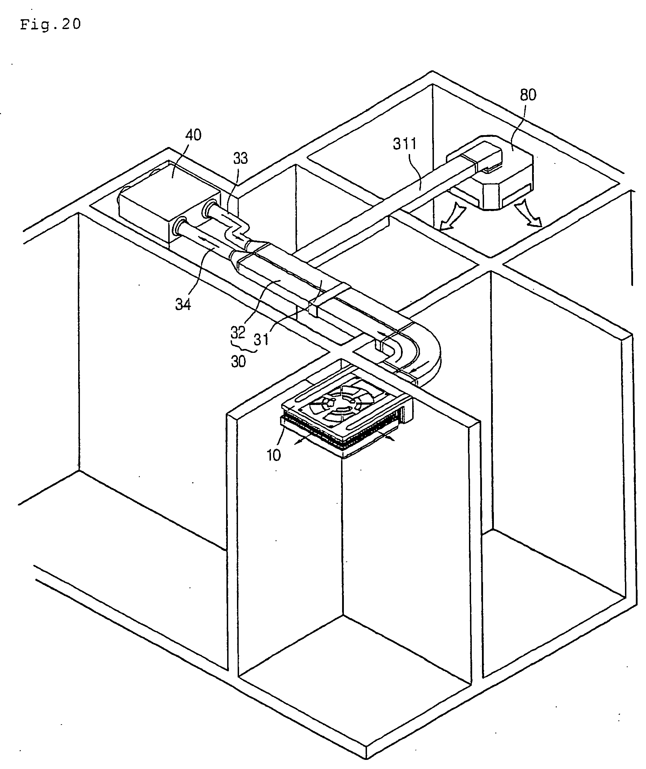

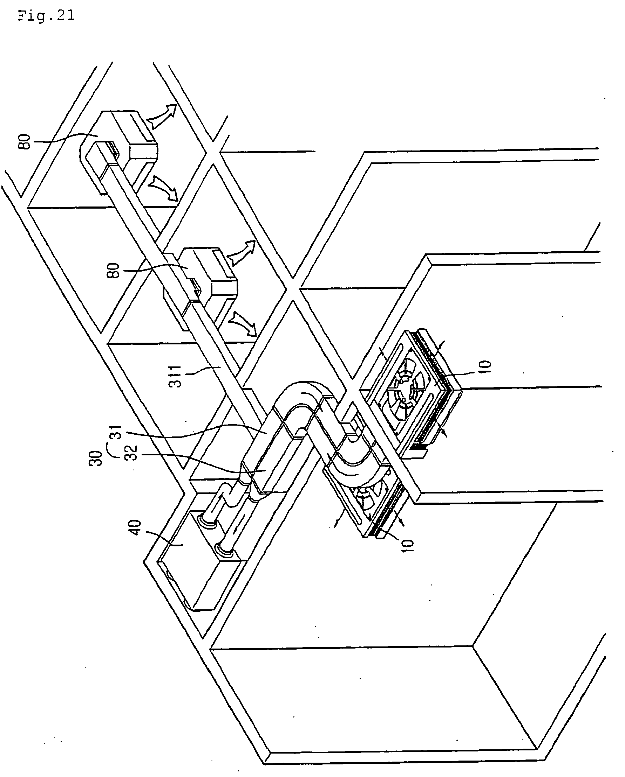

Figs. 20 and 21 are system diagrams of air conditioning systems according to another embodiments of the present invention.

Referring to Fig. 20, an air cleaning unit 10 is connected to a ventilation unit such as a heat recovery ventilator 40 through a duct member 30. The air cleaning unit 10 and the heat recovery ventilator 40 can be installed in the same indoor area compartment or different indoor area compartments.

A branch supply duct 311 can branch off from one side of a supply duct 31 of the duct member 30, and an air cooling unit 80 can be connected to one end of the branch supply duct 311. The branch supply duct 311 provides the same function as the diffuser 70 shown in Fig. 19.

In detail, the branch supply duct 311 can be connected to an indoor unit or an outdoor unit of the air cooling unit 80. In more detail, when the branch supply duct 311 is connected to the indoor unit of the air cooling unit 80, outdoor air is cooled in the heat recovery ventilator 40 and then supplied to the indoor unit of the air cooling unit 80. In the indoor unit of the air cooling unit 80, the outdoor air is further cooled by an indoor heat exchanger (i.e., an evaporator) and then discharged to an indoor area.

Though not shown in Fig. 20, when the branch supply duct 311 is connected to the outdoor unit of the air cooling unit 80, the outdoor unit can operate at a higher efficiency than in the related art.

In detail, outdoor air introduced into the heat recovery ventilator 40 exchanges heat with indoor air discharged from an indoor area through an exhaust duct connecting tube 34, such that the outdoor air can be cooled. Then, the outdoor air flows through a supply duct connecting tube 33, the supply duct 31, and the branch supply duct 311 toward the outdoor unit of the air cooling unit 80 where the outdoor air exchanges heat with refrigerant.

In a related art outdoor unit of an air cooling unit, outdoor air is directly introduced into the outdoor unit and exchanges heat with refrigerant flowing through a heat exchanger. However, in the present invention, outdoor air is cooled by the heat recovery ventilator 40 and then supplied to the outdoor unit of the air cooling unit 80. Therefore, the heat exchanging efficiency of the outdoor unit can be improved.

Instead of the air cooling unit 80, a heat pumping unit or air conditioning unit with a heating function can be connected to the end of the branch supply duct 311. In detail, the heat pumping unit includes an outdoor unit and an indoor unit, and the branch supply duct 311 is connected to the outdoor unit or the indoor unit of the heat pumping unit. Outdoor air is supplied through the branch supply duct 311 into the outdoor unit or the indoor unit of the heat pumping unit where the outdoor air changes heat with refrigerant flowing inside a heat exchanger. In more detail, when the branch supply duct 311 is connected to the outdoor unit of the heat pumping unit, outdoor air is supplied from the branch supply duct 311 to the outdoor unit of the heat pumping unit at a temperature higher than an outdoor temperature since the outdoor air is supplied to the outdoor unit after being heated in the heat recovery ventilator 40 by heat exchange with discharging indoor air. Therefore, refrigerant flowing inside the heat exchanger of the outdoor unit can take much heat from the introduced outdoor air so that the heat exchanging efficiency of the outdoor unit of the heat pumping unit can be improved. In the following embodiments of the present invention, a heat pumping unit can be installed instead of an air cooling unit 80 as described in the current embodiment. Thus, description thereof will be omitted.

Referring to Fig. 21, a plurality of air cooling units 80 can be connected to a branch supply duct 311, and a plurality of air cleaning units 10 can be connected to a supply duct 31 and an exhaust duct 32 of a duct member 30. Each of the air cooling units 80 or the air cleaning units 10 can be independently installed in each indoor area compartment. The air cleaning units 10 can be connected to the duct member 30 by a ceiling or wall installation method. The installation method of the air cleaning unit 10 can be easily determined from the structure of the duct member 30 and an installation case attached to the air cleaning unit 10.

Although the branch supply duct 311 is connected to an indoor unit of each air cooling unit 80 in Fig. 21, the branch supply duct 311 can be connected to an outdoor unit of the air cooling unit 80 as described above.

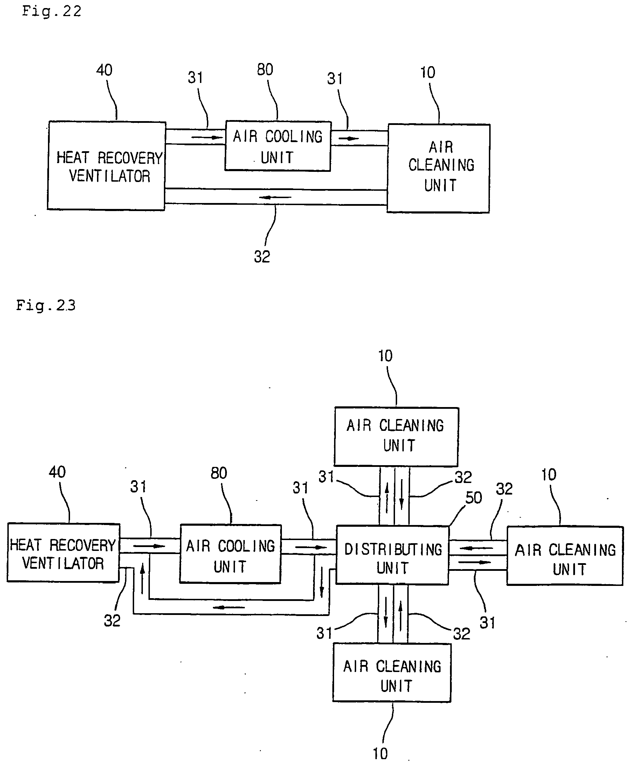

Fig. 22 is a block diagram of an air conditioning system according to another embodiment of the present invention.

Referring to Fig. 22, the air conditioning system of the current embodiment is characterized in that an air cooling unit 80 is connected between a heat recovery ventilator 40 and an air cleaning unit 10. Air discharged from the air cooling unit 80 is entirely or partially supplied to the air cleaning unit 10 through a supply duct 31.

In detail, the supply duct 31 extends from the heat recovery ventilator 40 to the air cooling unit 80 and further extends from the air cooling unit 80 to the air cleaning unit 10. An exhaust duct 32 extends from the air cleaning unit 10 directly to the heat recovery ventilator 40. Therefore, the air conditioning system can provide air-cooling as well as ventilation and air-cleaning.

Air cooled by the air cooling unit 80 is supplied to the air cleaning unit 10 where the air passes through a filter and thus impurities such as dust are removed from the air. In other words, indoor or outdoor air is cleaned by a filter installed in the air cooling unit 80 and further cleaned by the filter installed in the air cleaning unit 10, so that very clean air can be supplied to an indoor area.

In detail, when the supply duct 31 is connected to an outdoor unit of the air cooling unit 80, indoor air may be introduced into an indoor unit of the air cooling unit 80 and all or some of the indoor air discharged from the indoor unit may be introduced into the air cleaning unit 10. When the supply duct 31 is connected to the indoor unit of the air cooling unit 80, outdoor air may be supplied to the indoor unit and discharged from the indoor unit in a cooled state. All or some of the cooled outdoor air may be supplied to the air cleaning unit 10. Further, in ventilation mode, indoor air introduced into the air cleaning unit 10 is directed to the heat recovery ventilator 40, where the indoor air exchanges heat with outdoor air introduced into the heat recovery ventilator 40 from an outdoor area and then discharged to the outdoor area.

Fig. 23 is a block diagram of an air conditioning system according to another embodiment of the present invention.

Referring to Fig. 23, the air conditioning system of the current embodiment includes a heat recovery ventilator 40, an air cooling unit 80, a distributing unit 50, and a plurality of air cleaning units 10 connected to the distributing unit 50.

In detail, the heat recovery ventilator 40 is connected to an outdoor unit or an indoor unit of the air cooling unit 80 through a supply duct 31, and the air cooling unit 80 is connected to the distributing unit 50 to supply cooled air to the distributing unit 50. The distributing unit 50 distributes the air to the plurality of air cleaning units 10. Then, the air is discharged to indoor areas through discharge grills of the air cleaning units 10. Here, the air cleaning units 10 are installed in respective indoor area compartments divided by walls.

In ventilation mode, indoor air is sucked into the air cleaning units 10 and then sent to the distributing unit 50 through exhaust ducts 32. The indoor air collected in the distributing unit 50 is sent to the heat recovery ventilator 40 through an exhaust duct 32 directly connected between the distributing unit 50 and the heat recovery ventilator 40. Then, the indoor air is discharged to an outdoor area from the heat recovery ventilator 40.

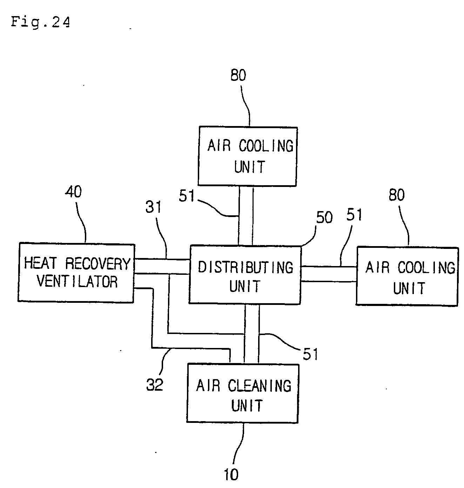

Fig. 24 is a block diagram of an air conditioning system according to another embodiment of the present invention.

Referring to Fig. 24, the air conditioning system of the current embodiment includes a heat recovery ventilator 40, a distributing unit 50 connected to the heat recovery ventilator 40, and a plurality of air cooling units 80 and an air cleaning unit 10 that are connected to the distributing unit 50.

In detail, the heat recovery ventilator 40 and the distributing unit 50 are connected through a supply duct 31. A plurality of branch tubes 51 extends from the distributing unit 50. The plurality of air cooling units 80 and the air cleaning unit 10 are connected to one ends of the branch tubes 51. An exhaust duct 32 extends from the air cleaning unit 10 to the heat recovery ventilator 40.

In this configuration, outdoor air drawn by the heat recovery ventilator 40 is directed along the supply duct 31 to the distributing unit 50 where the outdoor air is supplied to the air cooling units 80 and the air cleaning unit 10 through the branch tubes 51. In ventilation mode, indoor air is drawn into the air cleaning unit 10 and sent to the heat recovery ventilator 40 through the exhaust duct 32. Then, the indoor air is discharged to an outdoor area from the heat recovery ventilator 40.

As described above, the air conditioning system of the present invention provides clean air to a number of indoor air compartments using a single ventilation unit.

Further, the air cleaning unit operates in conjunction with the hear recovery ventilator such that temperature difference can be reduced between inflow of outdoor air and outflow of indoor air, thereby minimizing indoor area cooling or heating loss.

Furthermore, since a plurality of air cleaning units can be connected to a single heat recovery ventilator by varying the shape and arrangement of the duct member, air can be supplied to each indoor area compartment using the single heat recovery ventilator through the air cleaning units.

In addition, a heat or a humidifier can be installed between the heat recovery ventilator and the air cleaning unit, such that humidity controlling and air heating functions can be provided in addition to the ventilation and air cleaning functions.

According to the air conditioning system of the present invention, a plurality of air cleaning units can be connected to a single heat recovery ventilator by varying the shape and arrangement of duct member connecting the air cleaning units and the heat recovery ventilator. Therefore, the present invention can be applied to various fields.

It will be apparent to those skilled in the art that various modifications and variations can be made in the present invention. Thus, it is intended that the present invention covers the modifications and variations of this invention provided they come within the scope of the appended claims.

## Claims

1. An air conditioning system comprising:
- an air cleaning unit (10) including a grille (14) having a discharge grille (141) on a side portion, a fan (15) sucking indoor air and/or outdoor air, a filter (13) cleaning the sucked air, and an installation case (17,27) attached to one side of the grille (14) and having a suction hole (173, 273) and an exhaust hole (172, 272);
- a ventilation unit (40) operating in association with the air cleaning unit (10); and
- a duct member (30) connecting the air cleaning unit (10) and the ventilation unit (40), the duct member (30) including a supply duct (31) connected to the suction hole (173, 273) and an exhaust duct (32) connected to the exhaust hole (172, 272);
- an air suction hole (111),
wherein the outdoor air is, in the ventilation mode, sucked into the air cleaning unit (10) through the supply duct (31), passes through the filter (13) and is discharged to an indoor area,
and wherein the indoor air is, in the cleaning mode, sucked into the air cleaning unit (10) through the air suction hole (111), passes through the filter (13) and is discharged to the indoor area,
wherein the ventilation unit (40) comprises a heat exchanger (41) placed thereinside, such that the indoor air flowing along the exhaust duct (32) and the outdoor air sucked into the ventilation unit (40) exchange heat, **characterized in that** the air cleaning unit (10) further comprises a front cover (11) having said air suction hole (111) in a center portion thereof, wherein when the air suction hole (111) is opened, a ventilation mode and a cleaning mode is simultaneously performed.

2. The air conditioning system according to claim 1, wherein the supply duct (31) and the exhaust duct (32) include one or more straight tubes (312, 322)having a predetermined length, one or more elbows (313, 323) connected to the straight tubes (312, 322) for changing air flow passage, an equally-shaped connector (301) connecting the straight tubes (312, 322) and/or connecting the elbows (313, 323) to the straight tubes (312, 322), and a differently-shaped connector 314, 324) connecting the straight tubes (312, 322) or the elbows (313, 323) to the ventilation unit (40).

3. The air conditioning system according to claim 1, wherein the air cleaning unit (10) is connected to the duct member (30) or a branch duct branching off from an end or a side of the duct member (30) by the installation case (27) having the suction hole (273) and the exhaust hole (272) formed through a top surface thereof, when an end of the duct member (30) or an end of the branch duct terminates through a ceiling,
wherein the branch duct includes a branch supply duct (311) and a branch exhaust duct (321).

4. The air conditioning system according to claim 1, wherein the air cleaning unit (10) is connected to the duct member (30) or a branch duct branching off from an end or a side of the duct member by the installation case (17) having the suction hole (173) and the exhaust hole (172) formed in a front-to-back direction thereof, when an end of the duct member (30) or an end of the branch duct terminates through a wall,
wherein the branch duct includes a branch supply duct (311) and a branch exhaust duct (321).

5. The air conditioning system according to claim 1, wherein the duct member (30) comprises an end running through a wall and a branch duct branching off from one side of the duct member and running through a ceiling, and a plurality of the air cleaning units (10) are connected to the end of the duct member (30) and an end of the branch duct, respectively,
wherein the branch duct includes a branch supply duct (311) and a branch exhaust duct (321).

6. The air conditioning system according to claim 1, wherein the air cleaning unit (10) and the ventilation unit (40) are installed in separate areas, respectively.

7. The air conditioning system according to claim 1, further comprising a humidifier (60) at the duct member (30) for controlling humidity of the air flowing into the indoor area.

8. The air conditioning system according to claim 1, further comprising:
- a distributing unit (50) connected to an end of the duct member (30); and
- at least one distinct duct member branching off from the distributing unit and connected to the air cleaning unit (10).

9. The air conditioning system according to claim 8, further comprising a heater, a heat pumping unit supplying heated air to the indoor area or an air cooling unit supplying cooled air to the indoor area, connected to the duct member (30) or the distributing unit (50), for controlling temperature of the air flowing into the indoor area.

10. The air conditioning system according to claim 1, further comprising a diffuser (70) connected to the ventilation unit (40) or the duct member (30).

11. The air conditioning system according to claim 10, further comprising:
- a distributing unit (50) connected to the diffuser (70); and
- a plurality of distinct diffusers (72) branching off from the distributing unit (50).

## Patentansprüche

1. Klimaanlage, die Folgendes umfasst:
- eine Luftreinigungseinheit (10), die ein Gitter (14), das an einem Seitenabschnitt ein Auslassgitter (141) aufweist, einen Ventilator (15), der Innenraumluft und/oder Außenluft ansaugt, einen Filter (13), der die angesaugte Luft reinigt, und ein Einbaugehäuse (17, 27) enthält, das an einer Seite des Gitters (14) befestigt ist und eine Ansaugöffnung (173, 273) und eine Ausblasöffnung (172, 272) aufweist;
- eine Lüftungseinheit (40), die in Verbindung mit der Luftreinigungseinheit (10) arbeitet; und
- ein Kanalelement (30), das die Luftreinigungseinheit (10) und die Lüftungseinheit verbindet, wobei das Kanalelement (30) einen Zufuhrkanal (31), der mit der Ansaugöffnung (173, 273) verbunden ist, und einen Ausblaskanal (32), der mit der Ausblasöffnung (172, 272) verbunden ist, enthält;
- eine Luftansaugöffnung (111),
wobei die Außenluft in dem Lüftungsmodus durch den Zufuhrkanal (31) in die Luftreinigungseinheit (10) gesaugt wird, den Filter (13) durchläuft und in einen Innenraumbereich ausgelassen wird,
und wobei die Innenraumluft in dem Reinigungsmodus durch die Luftansaugöffnung (111) in die Luftreinigungseinheit (10) gesaugt wird, den Filter (13) durchläuft und in den Innenraumbereich ausgelassen wird,
wobei die Lüftungseinheit (40) einen darin positionierten Wärmetauscher (41) umfasst, so dass die Innenraumluft, die entlang des Ausblaskanals (32) strömt, und die Außenluft, die in die Lüftungseinheit (40) gesaugt wird, Wärme tauschen,
**dadurch gekennzeichnet, dass** die Luftreinigungseinheit (10) ferner eine vordere Abdeckung (11) umfasst, die in ihrem Mittelabschnitt die Luftansaugöffnung (111) aufweist,
wobei ein Lüftungsmodus und ein Reinigungsmodus gleichzeitig ausgeführt werden, wenn die Luftansaugöffnung (111) geöffnet ist.

2. Klimaanlage nach Anspruch 1, wobei der Zufuhrkanal (31) und der Ausblaskanal (32) ein oder mehrere gerade Rohre (312, 322), die eine vorgegebene Länge haben, ein oder mehrere Kniestücke (313, 323), die mit den geraden Rohren (312, 322) verbunden sind, um den Luftströmungsdurchgang zu ändern, ein gleich geformtes Verbindungsstück (301), das die geraden Rohre (312, 322) verbindet und/oder die Kniestücke (313, 323) mit den geraden Rohren (312, 322) verbindet, und ein anders geformtes Verbindungsstück (314, 324), das die geraden Rohre (312, 322) oder die Kniestücke (313, 323) mit der Lüftungseinheit (40) verbindet, enthalten.

3. Klimaanlage nach Anspruch 1, wobei die Luftreinigungseinheit (10) mit dem Kanalelement (30) oder einem Zweigkanal, der von einem Ende oder einer Seite des Kanalelements (30) abzweigt, durch das Einbaugehäuse (27), das die Ansaugöffnung (273) und die Ausblasöffnung (272) aufweist, die durch eine obere Oberfläche davon gebildet sind, verbunden ist, wenn ein Ende des Kanalelements (30) oder ein Ende des Zweigkanals durch eine Decke endet,
wobei der Zweigkanal einen Zweigzufuhrkanal (311) und einen Zweigausblaskanal (321) enthält.

4. Klimaanlage nach Anspruch 1, wobei die Luftreinigungseinheit (10) mit dem Kanalelement (30) oder einem Zweigkanal, der von einem Ende oder einer Seite des Kanalelements (30) abzweigt, durch das Einbaugehäuse (17), das die Ansaugöffnung (173) und die Ausblasöffnung (172) aufweist, die darin von vorne nach hinten gebildet sind, verbunden ist, wenn ein Ende des Kanalelements (30) oder ein Ende des Zweigkanals durch eine Wand endet,
wobei der Zweigkanal einen Zweigzufuhrkanal (311) und einen Zweigausblaskanal (321) enthält.

5. Klimaanlage nach Anspruch 1, wobei das Kanalelement (30) ein Ende, das durch eine Wand verläuft, und einen Zweigkanal, der von einer Seite des Kanalelements abzweigt und durch eine Decke läuft, umfasst, und mehrere der Luftreinigungseinheiten (10) mit dem Ende des Kanalelements (30) bzw. einem Ende der Zweigkanals verbunden sind,
wobei der Zweigkanal einen Zweigzufuhrkanal (311) und einen Zweigausblaskanal (321) enthält.

6. Klimaanlage nach Anspruch 1, wobei die Luftreinigungseinheit (10) und die Lüftungseinheit (40) jeweils in getrennten Bereichen montiert sind.

7. Klimaanlage nach Anspruch 1, die ferner an dem Kanalelement (30) einen Befeuchter (60) umfasst, um die Feuchtigkeit der in den Innenraumbereich strömenden Luft zu steuern.

8. Klimaanlage nach Anspruch 1, die ferner Folgendes umfasst:
- eine Verteilungseinheit (50), die mit einem Ende des Kanalelements (30) verbunden ist; und
- mindestens ein einzelnes Kanalelement, das von der Verteilungseinheit abzweigt und mit der Luftreinigungseinheit (10) verbunden ist.

9. Klimaanlage nach Anspruch 8, die ferner eine Heizvorrichtung, eine Wärmepumpeneinheit, die dem Innenraumbereich erwärmte Luft zuführt, oder eine Luftkühleinheit, die dem Innenraumbereich gekühlte Luft zuführt, umfasst, die mit dem Kanalelement (30) oder der Verteilungseinheit (50) verbunden sind, um die Temperatur der in den Innenraumbereich strömenden Luft zu steuern.

10. Klimaanlage nach Anspruch 1, die ferner einen Diffusor (70) umfasst, der mit der Lüftungseinheit (40) oder dem Kanalelement (30) verbunden ist.

11. Klimaanlage nach Anspruch 10, die ferner Folgendes umfasst:
- eine Verteilungseinheit (50), die mit dem Diffusor (70) verbunden ist; und
- mehrere einzelne Diffusoren (72), die von der Verteilungseinheit (50) abzweigen.

## Revendications

1. Système de conditionnement d'air comprenant :
- une unité de purification d'air (10) incluant une grille (14) ayant une grille de refoulement (141) sur une portion latérale, un ventilateur (15) qui aspire de l'air intérieur et/ou de l'air extérieur, un filtre (13) qui purifie l'air aspiré, et un boîtier d'installation (17, 27) attaché sur un côté de la grille (14) et ayant un trou d'aspiration (173, 273) et un trou de refoulement (172, 272) ;
- une unité de ventilation (40) qui fonctionne en association avec l'unité de purification d'air (10) ; et
- un élément formant conduit (30) qui connecte l'unité de purification d'air (10) et l'unité de ventilation (40), l'élément formant conduit (30) incluant un conduit d'alimentation (31) connecté au trou d'aspiration (173, 273) et un conduit de refoulement (32) connecté au trou de refoulement (172, 272) ;
dans lequel l'air extérieur est, dans le mode de ventilation, aspiré dans l'unité de purification d'air (10) via le conduit d'alimentation (31), passe à travers le filtre (13) et est refoulé vers une zone intérieure,
et dans lequel l'air intérieur est, dans le mode de purification, aspiré dans l'unité de purification d'air (10) via le trou de succion d'air (111), passe à travers le filtre (13) et est refoulé vers la zone intérieure,
dans lequel l'unité de ventilation (40) comprend un échangeur de chaleur (41) placé à l'intérieur de celle-ci, de telle façon que l'air intérieur qui s'écoule le long du conduit de refoulement (32) et l'air extérieur aspiré dans l'unité de ventilation (40) échangent de la chaleur, **caractérisé en ce que** l'unité de purification d'air (10) comprend en outre un couvercle frontal (11) ayant ledit trou de succion d'air (111) dans une portion centrale de lui-même,
dans lequel, quand le trou de succion d'air (111) est ouvert, un mode de ventilation et un mode de purification sont simultanément effectués.

2. Système de conditionnement d'air selon la revendication 1, dans lequel le conduit d'alimentation (31) et le conduit de refoulement (32) incluent un ou plusieurs tubes droits (312, 322) ayant une longueur prédéterminée, un ou plusieurs coudes (313, 323) connectés aux tubes droits (312, 322) pour changer le passage du flux d'air, un connecteur (301) de forme égale qui connecte les tubes droits (312, 322) et/ou qui connecte les coudes (313, 323) aux tubes droits (312, 322), et un connecteur de forme différente (314, 324) qui connecte les tubes droits (312, 322) ou les coudes (313, 323) à l'unité de ventilation (40).

3. Système de conditionnement d'air selon la revendication 1, dans lequel l'unité de purification d'air (10) est connectée à l'élément formant conduit (30) ou à un conduit ramifié qui se ramifie depuis une extrémité ou un côté de l'élément formant conduit (30) du fait que le boîtier d'installation (27) présente le trou d'aspiration (273) et le trou de refoulement (272) formés à travers une surface supérieure de celui-ci, quand une extrémité de l'élément formant conduit (30) ou une extrémité du conduit ramifié se termine à travers un plafond,
dans lequel le conduit ramifié inclut un conduit d'alimentation ramifié (311) et un conduit de refoulement ramifié (321).

4. Système de conditionnement d'air selon la revendication 1, dans lequel l'unité de purification d'air (10) est connectée à l'élément formant conduit (30) ou à un conduit ramifié qui se ramifie depuis une extrémité ou un côté de l'élément formant conduit du fait que le boîtier d'installation (17) présente le trou d'aspiration (173) et le trou de refoulement (172) formés dans une direction avant/arrière de celui-ci, quand une extrémité de l'élément formant conduit (30) ou une extrémité du conduit ramifié se termine à travers une paroi,
dans lequel le conduit ramifié inclut un conduit d'alimentation ramifié (311) et un conduit de refoulement ramifié (321).

5. Système de conditionnement d'air selon la revendication 1, dans lequel l'élément formant conduit (30) comprend une extrémité qui passe à travers une paroi et un conduit ramifié qui se ramifie depuis un côté de l'élément formant conduit et qui passe à travers un plafond, et une pluralité des unités de purification d'air (10) sont connectées à l'extrémité de l'élément formant conduit (30) et à une extrémité du conduit ramifié, respectivement,
dans lequel le conduit ramifié inclut un conduit d'alimentation ramifié (311) et un conduit de refoulement ramifié (321).

6. Système de conditionnement d'air selon la revendication 1, dans lequel l'unité de purification d'air (10) et l'unité de ventilation (40) sont respectivement installées dans des zones séparées.

7. Système de conditionnement d'air selon la revendication 1, comprenant en outre un humidificateur (60) sur l'élément formant conduit (30) pour commander l'humidité de l'air qui s'écoule vers la zone intérieure.

8. Système de conditionnement d'air selon la revendication 1, comprenant en outre :
- une unité de distribution (50) connectée à une extrémité de l'élément formant conduit (30) ; et
- au moins un élément formant conduit distinct ramifié depuis l'unité de distribution et connecté à l'unité de purification d'air (10).

9. Système de conditionnement d'air selon la revendication 8, comprenant en outre un dispositif chauffant, une unité de pompe à chaleur qui fournit de l'air chauffé à la zone intérieure, ou une unité de refroidissement d'air qui fournit de l'air refroidi à la zone intérieure, connectée à l'élément formant conduit (30) ou à l'unité de distribution (50) pour commander la température de l'air qui s'écoule vers la zone intérieure.

10. Système de conditionnement d'air selon la revendication 1, comprenant en outre un diffuseur (70) connecté à l'unité de ventilation (40) ou à l'élément formant conduit (30).

11. Système de conditionnement d'air selon la revendication 10, comprenant en outre :
- une unité de distribution (50) connectée au diffuseur (70) ; et
- une pluralité de diffuseurs distincts (72) qui sont ramifiés depuis l'unité de distribution (50).
